# EUROPÄISCHE PATENTSCHRIFT

(11) **EP 1 464 627 B1**
(45) Veröffentlichungstag und Bekanntmachung des Hinweises auf die Patenterteilung: **04.05.2011**
(21) Anmeldenummer: 04004325.9
(22) Anmeldetag: 26.02.2004
(51) Int. Cl.: C02F 5/12, E21B 37/06

(54) **Verfahren zur Verhinderung von Ablagerungen in Wasser**
Process to prevent the formation of deposits in water
Procédé de prévention de la formation de dépôts dans l'eau

(30) Priorität: 11.03.2003 DE 10310414
(43) Veröffentlichungstag der Anmeldung: 06.10.2004
(73) Patentinhaber: LANXESS Deutschland GmbH, 51369 Leverkusen (DE)
(72) Erfinder: Klein, Thomas, Dr., 50678 Köln (DE); Mitschker, Alfred, Dr., 51519 Odenthal (DE); Ebert, Fred, 51373 Leverkusen (DE)

(56) Entgegenhaltungen:
- EP-A- 0 147 223
- WO-A-02/16731
- DE-A- 19 721 590
- US-A- 4 540 570
- US-A- 5 525 257

## Beschreibung

Die vorliegende Erfindung betrifft ein Verfahren zur Verhinderung von Ablagerungen, die in Systemen stehender oder fließender Gewässer durch härtebildende Ionen entstehen mittels eines Konditionierungsmittels auf Basis einer Mischung von Polysuccinimid (PSI) oder dessen Teilhydrolysat mit wenigstens einem Biostatikum.

Unter fließenden Wassersystemen werden im Sinne der vorliegenden Erfindung Bauwerksentwässerungssysteme oder Drainagen angesehen, aber auch Einpresswässer bei der Exploration von Rohstoffen, insbesondere von Erdölen oder Erdgasen, besonders bevorzugt in den sogenannten Squeeze-Operationen der Erdölförderung (bekannt aus US-A 5 655 601).

Bauwerke bei denen die erfindungsgemäßen Wasserkonditionierungsmittel angewendet werden können sind beispielsweise Gebäude, Tunnelbauten, Stollen, Kavernen, Staumauern, Talsperren, Wasserkraftbauten, Erddämme, Stützmauern, Straßenbauten, Hangentwässerungsanlagen, Wasserablaufkanäle, Quellfassungen oder provisorische Baugruben. Ebenfalls Bauwerke im Sinne der vorliegenden Erfindung sind Infrastrukturanlagen wie etwa Deponien (für kommunale oder gewerbliche Abfälle) einschließlich das diese durchziehende Entwässerungssystem, sowie Brücken und deren Entwässerungssysteme oder Kläranlagen.

Stehende Wassersysteme im Sinne der vorliegenden Erfindung sind beispielsweise stehende Gewässer in Schwimmbädern oder auch als Matrix in unterirdischen Erdöllagerstätten sowie Teichanlagen.

Die genannten Bauwerke bzw. Operationen unter Ausnutzen der Wassereigenschaften des jeweiligen Grund-, Ab-, Sicker- oder Fließwässer weisen einen unterschiedlich hohen Gehalt an gelösten Wasserinhaltsstoffen auf. Diese vorwiegend anorganischen Wasserinhaltsstoffe verursachen oft harte Ablagerungen. Beim Eintritt von beispielsweise Grund- oder Sickerwässer in Entwässerungssysteme verändern sich die physikalischen Bedingungen derart, dass die ursprünglich gelösten Wasserinhaltsstoffe harte, festhaftende Ablagerungen bilden, welche in amorpher oder kristalliner Form vorliegen können. Diese Ablagerungen (Versinterungen) bestehen üblicherweise aus Calciumcarbonat, Magnesiumcarbonat, Calciumsulfat (Gips), Silikaten (SiO₂), Bariumsulfat und Eisenoxiden, alle gegebenenfalls in ihrer hydratisierten Form oder Calciummagnesiumphosphat oder anderen Phosphat-enthaltenden Doppelsalzen, wie sie beispielsweise in der DE-A 10 207 088 beschrieben werden.

Diese harten, festhaftenden Ablagerungen verkleinern den Abflussquerschnitt von Drainagen oder schließen Abflüsse/Rohrleitungen in Extremfällen ganz. In der Folge können die anfallenden Wassermengen nicht mehr frei abfließen, und es bilden sich Rückstaus, die große Schäden verursachen können.

Im Bereich von beispielsweise Schwimmbädern ist das Inhaltswasser derart zu konditionieren, dass es nicht zu Ablagerungen an den Beckenwänden oder in Pumpen und Filtern kommt. Im Bereich der Exploration von Rohstoffen, beispielsweise der Erdölförderung, erfordern die dort einzusetzenden Konditionierungsmittel hohe Druckstabilität und hohe Thermostabilität.

Aus WO 02/16731 A sind Konditionierungsmittel auf Basis von Polysuccinimid oder dessen Teilhydrolysaten in Kombination mit Hilfsstoffen aus gesättigten oder ungesättigten, linearen oder verzweigten Aryl- oder Alkylverbindungen mit 5-50 C-Atomen zur Konditionierung stehender oder fließender Wassersysteme bekannt.

Aus DE-A 10 101 671 sind Konditionierungsmittel bekannt, die neben PSI auch Fettsäuren und Biozide enthalten können.

Als Biozide werden dort beispielsweise Phthalimidoperoxohexansäure, Dibenzoproxid, Chlorbromdimethylhydantoin oder weitere organische Peroxide vorgeschlagen. Es handelt sich dabei um Biozide, die Sauerstoff oder Chlor abspalten und die als wasserlabil einzustufen sind, da diese Abspaltung sehr rasch erfolgt. Darüber hinaus sind sie nicht unbedingt in allen wässrigen Medien einsetzbar, insbesondere dann nicht, wenn das zu konditionierende Wasser in der Nahrungsmittelindustrie eingesetzt werden soll oder nach der Reinigung in Kläranalgen in natürliche Wasserreservoirs oder ins Oberflächenwasser abgelassen werden soll.

Außerdem wurde bei der Anwendung von Tabletten gemäß DE-A 10 101 671 beobachtet, dass in keimführenden Wassersystemen nach einiger Zeit trotz der Zugabe von Bioziden nach deren Abbau bzw. Zerfall ein Befall der Tabletten mit Mikroorganismen, bevorzugt Hefen und/oder Schimmelpilzen, einsetzt, der schließlich einen so dichten Rasen bildet, dass die Freisetzung des PSI zur Auflösung von festhaftenden Ablagerungen der oben beschriebenen Art nicht mehr ausreichend gewährleistet ist.

Es bestand daher die Aufgabe ein Verfahren zur Verhinderung von Ablagerungen auf Basis von PSI zu entwickeln, wodurch der Bewuchs von PSI-Tabletten langfristig verhindert wird.

Die Aufgabe wird dadurch gelöst, das man PSI zusammen mit Biostatika einsetzt, die als wasserstabile Konservierungsstoffe nicht nur ein günstigeres toxikologisches Profil, sondern auch eine länger anhaltende Wirkung des PSI gewährleisten.

Gegenstand der vorliegenden Erfindung ist ein Verfahren zur Verhinderung von Ablagerungen in stehenden und fließenden Wassersystemen, dadurch gekennzeichnet, dass dem stehenden Wasser oder dem abzuführenden Sicker-, Ab-, Fließ- oder Grundwasser ein Konditionierungsmittel auf Basis von Polysuccinimid oder dessen Teilhydrolysat und wenigstens einem Biostatikum zugegeben wird, wobei dem zu konditionierenden Gewässer 0,1 bis 10 000 g/m³ PSI und 0,1 bis 100 g/m³ zugegeben wird und als Biostatika Phenol, ortho Phenylphenol oder Natriumorthophenylphenolat eingesetzt werden.

Unter Polysuccinimid (PSI) im Sinne der vorliegenden Erfindung versteht man PSI selber, dessen Copolymere sowie Hydrolysate, oder dessen Teilhydrolysate, wie sie beispielsweise aus der Umsetzung von Asparaginsäure mit Asparaginsäure-Natriumsalz gemäß WO 98/47 964 erhalten werden.

Biostatika im Sinne der vorliegenden Erfindung sind ungesättigte oder aromatische C₄-C₇-Carbonsäuren oder Phenole oder deren Salze mit Alkali- oder Erdalkalimetallen .

Ungesättigte C₄-C₇-Carbonsäuren im Sinne der vorliegenden Erfindung sind beispielsweise Acrylsäure, Crotonsäure, Methacrylsäure, trans-2,4-Pentadiensäure, trans-2-Pentensäure, 3,3-Dimethylacrylsäure, 4-Pentensäure, Sorbinsäure, trans-2-Hexensäure, trans-3-Hexensäure, 2,6-Heptadiensäure, 6-Heptensäure oder Cyclopentylessigsäure.

Bevorzugte Alkali- oder Erdalkalisalze dieser C₄-C₇ ungesättigten Carbonsäuren sind die Natrium-, Kalium- oder Calciumsalze.

Bevorzugte biostatisch wirksame Phenole sind Phenol selbst, ortho-Phenylphenol und Natriumorthophenylphenolat. Bevorzugte biostatisch wirksame aromatische Carbonsäuren sind Benzoesäure oder Salicylsäure und/oder deren Natrium-, Kalium- oder Calciumsalze.

Besonders bevorzugte ungesättigte C₄-C₇-Carbonsäuren bzw. deren Salze sind die mit E-Nummern zugelassenen Lebensmittel Konservierungsstoffe wie E 200 Sorbinsäure, E 201 Natriumsorbat, E 202 Kaliumsorbat, E 203 Calciumsorbat, E 200 Sorbinsäure, E 201 Natriumsorbat, E 202 Kaliumsorbat, E 203 Calciumsorbat, E 210 Benzoesäure, E 211 Natriumbenzoat, E 212 Kaliumbenzoat, E 213 Calciumbenzoat, E 214 Ethyl-4-hydroxybenzoat (PHB-Ester), E 215 Ethyl-4-hydroxybenzoat-Natriumsalz, E 216 Propyl-4-hydroxybenzoat (PHB-Ester), E 217 Propyl-4-hydroxybenzoat-Natriumsalz, E 218 Methyl-4-hydroxybenzoat (PHB-Ester), E 219 Methyl-4-hydroxybenzoat-Natriumsalz, E 231 Orthophenylphenol, E 232 Natriumorthophenylphenolat.

Aber prinzipiell ist auch der Einsatz von E 230 Biphenyl, E 233 Thiabendazol, E 235 Natamycin, E 270 Milchsäure oder E 239 Hexamethylentetramin (Urotropin) denkbar, wenngleich dies keine C₄-C₇-gesättigten oder aromatischen Carbonsäuren oder Phenole sind

Gemäß der vorliegenden Erfindung ist es auch möglich Gemische der genannten Biostatika untereinander zusammen mit PSI einzusetzen.

Gegenstand der vorliegenden Erfindung ist ein Verfahren zur Verhinderung von Ablagerungen in stehenden oder fließenden Wassersystemen, das dadurch gekennzeichnet ist, dass dem stehenden Wasser oder dem abzuführenden Sicker-, Grund-, Ab- oder Fließwasser ein Konditionierungsmittel auf Basis von Polysuccinimid oder dessen Teilhydrolysat und wenigstens einem Biostatikum zugegeben wird, wobei dem zu konditionierenden Gewässer 0,1 bis 10 000 g/m³ PSI und 0,1 bis 100 g/m³ zugegeben wird und als Biostatika Phenol, ortho Phenylphenol oder Natriumorthophenylphenolat eingesetzt werden. Durch die Zugabe eines Konditionierungsmittels auf Basis von PSI, zusammen mit einem Biostatikum zu dem zu behandelnden Wasser, kann nicht nur das Aufwachsen von unerwünschten Kristallkeimen wirkungsvoll verhindert werden, sondern gleichzeitig die Inhibierung des PSI durch Hefen oder Schimmelpilze über einen längeren Zeitraum vermieden werden, was mit Bioziden nicht erreicht wurde. Gleichzeitig wird die Ausbildung neuer harter Ablagerungen unmöglich.

Konditionierungsmittel für wässrige Systeme werden auf Grund ihrer Wirkungsweise verschieden bezeichnet, z.B. als Dispergiermittel, Härtestabilisatoren und Schutzkolloide. Ihnen können gegebenenfalls auch Sequestrierungsmittel (Komplexierungsmittel) oder gegebenenfalls auch weitere grenzflächenaktive Stoffe (Tenside) sowie gegebenenfalls zusätzlich noch Biozide hinzugefügt werden. Wichtig sind außerdem Härtestabilisatoren, d.h. Verbindungen, die zur Stabilisierung der Härtebildner in Entwässerungssystemen geeignet sind, wobei sie das Kristallwachstum desaktivieren und zumeist Oberflächenladung-verändernde Eigenschaften aufweisen, sowie Dispergatoren (Dispergiermittel). Dispergiermittel sind Oberflächenladung verändernde Verbindungen, die ungelöste Feststoffteilchen im Wasser - auch im kolloidalen Bereich - dispergieren, d.h. fein verteilt halten. Erfindungsgemäße Konditionierungsmittel auf Basis von PSI und Biostatika werden dem stehenden oder fließenden Wassersystem in Abhängigkeit vom jeweiligen Anwendungsbereich zugegeben.

So erfordern die Explorationsprozesse von Erdölen oder Erdgasen, insbesondere die Squeeze-Operationen, deutlich höhere PSI-Mengen, als der Einsatz in stehenden Wassersystemen, wie beispielsweise Schwimmbädern. PSI und Biostatikum werden deshalb dem stehenden oder fließenden Wassersystem, bevorzugt in wässriger Lösung, in Mengen von 0,1 bis 10000 g/m³ PSI und 0,1 bis 100 g/m³ Biostatikum, insbesondere 0,5 bis 5000 g/m³ PSI und 0,5 bis 50 g/m³ Biostatikum, des zu konditionierenden Wassers zugegeben.

Härtestabilisatoren und Dispergatoren überschneiden sich oft in ihrer Wirkung. Daher können die erfindungsgemäßen Konditionierungsmittel auch in Kombinationen mit Härtestabilisatoren oder Dispergatoren eingesetzt, wobei sich in der Regel ein höherer Wirkungsgrad gegenüber dem getrennten Einsatz ergibt. Die erfindungsgemäßen Konditionierungsmittel können auch noch weitere geeignete Zusätze enthalten, wobei aber immer die zukünftige Nutzung des abzuführenden Sicker- oder Grundwassers entscheidend ist, damit eine umweltgerechte Verhinderung von Versinterungen erreicht wird.

Das in dem erfindungsgemäßen Verfahren als Konditionierungsmittel einzusetzende PSI, dessen Copolymere, Teil- oder Hydrolysate zeigt eine sehr günstige Wirkungskorrelation von Dispergier- und Härtestabilisatoreigenschaften und kann aufgrund des slow-release-Effekt, d.h. der allmählichen Freisetzung des Wirkstoffs Polyasparaginsäure, zur Konditionierung stehender und fließender Wassersysteme, insbesondere der Bauwerksentwässerung, der Tunnelentwässerung und in der Erdölexploration eingesetzt werden. PSI, dessen Copolymere sowie Teilhydrolysate oder Hydrolysate, ist daher besonders geeignet zur Verhinderung von Ablagerungen, insbesondere von Calciumcarbonat, Magnesiumcarbonat, Calciumsulfat, Silikaten, Bariumsulfat, Eisenoxiden oder Phosphat-enthaltender Doppelsalze wie Calciummagnesiumphosphat. Darüber hinaus zeigt das als Konditionierungsmittel einzusetzende PSI in dem erfindungsgemäßen Verfahren folgende Vorteile:
- PSI ist nicht hygroskopisch und lässt sich mit geringem Bindemittelanteil von beispielsweise ≤ 10 % zu formstabilen Depotsteinen verpressen.
- PSI zeigt als Imid einen auf das Gewicht bezogenen höheren Wirkstoffanteil als das natriumhaltige Natriumpolyaspartat.
- PSI löst sich langsam auf, wobei die Auflösegeschwindigkeit mit dem pH ansteigt; es zeigt daher die gewünschte slow-release Eigenschaft.
- PSI zeigt aufgrund seiner geringen Löslichkeit ein gegenüber Polyasparaginsäure verlangsamtes Abbauverhalten mit entsprechend reduziertem Potential zu Biofouling.
- PSI ist aufgrund seiner Säure freisetzenden Eigenschaft in der Lage, Kalkablagerungen zurückzubilden und abzulösen. Im Gegensatz zu den leichtlöslichen organischen Säuren wird durch das unlösliche PSI ein Verbleiben des Wirkstoff-Precursors am Ort der Versinterung gewährleistet. Darüber hinaus können PSI-Teilhydrolysate über ihre Adsorptionsfähigkeit an Calcit Säure lokal an Kalkoberflächen binden und damit Kalk mit sehr hoher Dosis-Wirkungs-Beziehung lösen.

PSI kann in großtechnischem Maßstab durch thermische Polymerisation von Maleinsäureanhydrid und Ammoniak oder deren Derivate hergestellt werden (siehe US-A 3,846,380; US-A 4,839,461; US-A 5,219,952 oder US-A 5,371,180).

Darüber hinaus erhält man PSI durch thermische Polymerisation von Asparaginsäure (US-A 5,051,401) gegebenenfalls in Gegenwart saurer Katalysatoren/Lösungsmittel (US-A 3,052,655).

PSI fällt bei der chemischen Synthese als Polymer mit einem mittleren Molgewicht von 500 bis 20 000, bevorzugt 3 000 bis 5 000, an. Polysuccinimid ist als chemischer Vorläufer der Polyasparaginsäure zu betrachten, zu der es mit Wasser langsam hydrolysiert. Der pH-Wert der dabei entstehenden Lösung liegt zwischen pH 1 bis 4, bevorzugt 2 bis 3. Hierdurch kommt nicht nur die gute steinlösende, sondern auch gleichzeitig die dispergierende Wirkung der durch PSI freigesetzten Polyasparaginsäure gegenüber schwerlöslichen Calciumsalzen bzw. anderen schwerlöslichen Stoffen zum Tragen. Die resultierende saure Lösung führt aufgrund ihrer Säurewirkung auch zur direkten Auflösung eventuell gebildeter Calciumcarbonat-Inkrustationen. Vor allem in harten Gebirgswässern mit erhöhtem pH-Wert und damit verschärfter Inkrustationsproblematik zeigt PSI günstigerweise eine erhöhte Löslichkeit. Zudem ist PSI wegen seiner langsamen Hydrolyse bei zugleich geringer Wasserlöslichkeit lange am Einsatzort wirksam und damit dem direkten Einsatz von Polyasparaginsäure deutlich überlegen (slow-release Effekt).

Gegebenenfalls können neben PSI in dem erfindungsgemäßen Verfahren weitere Härtestabilisatoren eingesetzt werden. Als zusätzliche Härtestabilisatoren können Verbindungen der Reihe anorganische kondensierte Phosphate, wie Alkali-di-, -tri- und -polyphosphate, organische Phosphorverbindungen oder Organophosphonsäuren, wie beispielsweise 2-Methyl-propanphosphonsäure, Hydroxyethylidendiphosphonsäure, Aminomethylenphosphonsäuren, N-haltige Phosphonate, Aminophosphonate, Aminoalkylenphosphonsäuren wie Aminotri(methylenphosphonsäure) oder Diethylentriamino-penta(methylenphosphonsäure), Poly(aminomethylen-phosphonate), oder Hydroxyethyl-ethylen(di(aminomethylen)-phosphonsäure), ferner Phosphonocarbonsäuren, z.B. Phosphonobutan-tricarbonsäure, Phosphatester, Polyphosphorsäureester, Aminophosphate, Bernsteinsäureamid, Kohlehydrate, Polysaccharide, Glukonate, Polyglycoside, Polyglucoside und deren Derivate, Polyoxycarbonsäuren sowie deren Copolymere, oxidierte Kohlehydrate, wie oxidierte Zellulose, Stärke oder Dextrin, Proteine und andere Eiweißprodukte, wasserlösliche Polyaminosäuren, beispielsweise Polyasparaginsäure, Silikate, wie Alkalisilikate, Wasserglas oder Zeolithe eingesetzt werden.

Auch die wasserlöslichen Salze der aufgeführten Säuren sind als Härtestabilisatoren neben PSI geeignet, bevorzugt die Natriumsalze.

In einer besonders bevorzugten Ausführungsform der vorliegenden Erfindung liegt PSI zusammen mit Polyasparaginsäure im Konditionierungsmittel vor. Da PSI unter geeigneten Bedingungen zu Polyaspartat hydrolysiert, selber jedoch eher als hydrophob anzusehen ist, erhält man eine Depotwirkung an Härtestabilisator in der erfindungsgemäßen Formulierung im Sinne einer "slow-release" Formulierung.

Gegebenenfalls können in dem erfindungsgemäßen Verfahren den Konditionierungsmitteln Dispergatoren zugegeben werden. Geeignete Dispergatoren sind beispielsweise Tanninderivate, wie sulfitierte Tannine, Ligninsulfonate, sulfonierte Kondensationsprodukte des Naphthalins mit Formaldehyd, anionische Polyelektrolyte, z.B. Polymerisate auf Acrylatbasis, wie Polyacrylate, Polymethacrylate, Polyacrylamide und Copolymere von Acrylsäure bzw. Methacrylsäure und Acrylamid, ferner P-haltige polymere Verbindungen, wie N-Phosphomethyl-makrocyclische Polyether oder phosphonomethylierte Oxyalkylenamine sowie Phosphinsäure-haltige Homo- und Copolymere von Acrylsäure und Acrylamid und oligomere Phosphinico-Bemsteinsäure-Verbindungen (wie sie in der US-A 4 088 678 beschrieben werden). Weiter sind geeignet Polymere mit N-substituierten Amidfunktionen, z.B. sulfomethylierte oder sulfoethylierte Polyacrylamide und Polymethacrylamide und Copolymere bzw. Terpolymere mit Acrylsäure und Maleinsäureester, N-Butylacrylamid und dessen Copolymere, 2-Acrylamido-2-methyl-1-propansulfonsäure als Salz und deren Alkyl-substituierte Derivate und deren Copolymere, ferner phosphinoalkylierte Acrylamidpolymere und Copolymere mit Acrylsäure, Copolymere von Alkenen mit ungesättigten Dicarbonsäuren, und Polymere und Copolymere auf der Basis von Maleinsäure. Solche und ähnliche Verbindungen sind z.B. beschrieben in EP-A 225 596, EP-A 238 852, EP-A 238 853, EP-A 238 729, EP-A 265 846, EP-A 310 099, EP-A 314 083, EP-A 330 876 oder EP-A 517 470. Wasserlösliche Salze entsprechender Säuren sind ebenfalls geeignet.

Gegebenenfalls können die im erfindungsgemäßen Verfahren einzusetzenden Konditionierungsmittel Sequestriermittel enthalten.

Als Sequestriermittel oder Komplexierungsmittel im Sinne der vorliegenden Erfindung eignen sich unter anderem Iminodisuccinat (IDS), Nitrilotriessigsäure, Zitronensäure, Ethylendiamintetraessigsäure (EDTA), Ethercarboxylate oder oxidierte Kohlehydrate, beispielsweise partiell hydrolysierte und oxidierte Stärke oder Dextrin. Weiterhin sind phosphorhaltige Komplexbildner wie z.B. kondensierte Phosphate und Phosphonate, geeignet, sofern diese nicht bereits in ihrer Funktion als Härtestabilisatoren bereits eingesetzt werden.

Gegebenenfalls enthalten die im erfindungsgemäßen Verfahren einzusetzenden Konditionierungsmittel weitere Zusätze wie beispielsweise Aluminatverbindungen (siehe EP-A 0 302 522), Stabilisatoren wie polyquaternäre Amine, z.B. Poly(dimethylamino-co-epichlorhydrin) oder Poly(diallyldimethyl-ammoniumchlorid) (siehe US-A 5 038 861), oder geeignete Tenside, wie z.B. Alkyl-aryl-sulfonate, Polyvinylsulfonate, Natriummethoxymethylcellulose etc.

Die Anwendung von Biostatika schließt die gleichzeitige Verwendung von Bioziden nicht aus. Wo für die Anwendung der erfindungsgemäß einzusetzenden Konditionierungsmittel geeignet, können Biozide hinzugefügt werden. Prinzipiell sind dafür alle gemäß den nationalen Vorschriften zur Reinhaltung von Gewässern anzuwendenden Biozide geeignet. Als bevorzugte Biozide im Sinne der vorliegenden Erfindung werden Phthalimidoperoxohexansäure, Dibenzoperoxid, Chlorbromdimethylhydantoin oder weitere organische Peroxide eingesetzt.

Die Anwendung der im erfindungsgemäßen Verfahren einzusetzenden Konditionierungsmittel kann in üblicher Form wie beispielsweise Pulver, Tabletten oder Depotsteinen erfolgen. Darüber hinaus sind aber auch weitere Anwendungsformen möglich, die die Depotwirkung (d.h. die allmähliche und zeitlich konstante Freisetzung von Wirkstoff des PSI bzw. slow-release Eigenschaft, sowie die Freisetzung des Biostatikums unterstützen. Besonders geeignet sind dafür wasserdurchlässige oder selbstauflösende Beutel aus geeigneten synthetischen oder biologisch abbaubaren Polyesteramiden wie z.B. dem BAK™ (Bayer AG), wobei gemäß dem biologischen Abbau der Matrix (Polyesteramid) das PSI sich in Polyasparaginsäure umwandelt.

Das Verpressen des PSI mit dem jeweiligen Biostatikum in sogenannte Depotsteine oder Tabletten erfolgt gegebenenfalls mittels diverser Hilfsstoffe. Besonders geeignet als Hilfsstoffe im Sinne der vorliegenden Erfindung sind Fettsäuren, insbesondere Stearinsäure, Palmitinsäure oder Laurinsäure.

Beispielhaft werden Depotsteine in der Schweizer Bauzeitung des SIA "Schweizer Ingenieur und Architekt", Nr. 12, 24. März 2000, dargestellt.

### Beispiele

### Formulierungsbeispiele

### Beispiel 1

90 % PSI wurden mit 1,5 % Biostatikum und 8,5 % Palmitinsäure oder Stearinsäure innig vermischt und diese Mischung mittels einer Tablettiermaschine zu tablettenähnlichen Formkörpern verpresst. Diese Formkörper wurden bei einer Auflösegeschwindigkeit von 70 mg/h, Gewicht 50 g, in solchen Mengen eingesetzt, dass eine Konzentration in den Sickerwässern von ca. 0,1 bis 100 ppm und eine Konzentration von 0,1 bis 100 ppm Biostatikum gewährleistet war.

### Beispiel 2

Ein weiteres Beispiel für neutrale Wässer enthielt 70 % PSI, 25 % Polyasparaginsäure-Natriumsalz und 4,5 % Palmitin- bzw. Stearinsäure und 0,5 % o-Phenylphenol bzw. Natrium-o-phenylphenolat (Preventol^{®} ONS) im Folgenden als ONS bezeichnet).

Eine Tablette gemäß Beispiel 1 zeigte nach 2-monatiger Ausbringung in einem Bauwerksentwässerungssystem eine um 3 Zehnerpotenzen geringere Keimzahldichte als eine Tablette ohne Biostatikum (90 % PSI, 10 % Stearinsäure).

### Anwendungsbeispiele

Antimykotische Wirkung von PSI enthaltenden tablettenähnlichen Formkörpern:

### 1. Material und Methoden

### 1.1 Verwendete Agar-Sorten:

| | |
|---|---|
| Code-Nr. 211 | Sabouraud-Agar 2 % Glucose (Merck / 1.07315) |
| Code-Nr. 214 | Sabouraud-Agar mit 4 % Glucose (Merck / 1.05438) und 0,005 % Chlor-amphenicol (Sigma) |
| Code-Nr. 267 | Antibiotika-Agar Nr. 19 (Difco / 0043-17-0) |

### 1.2 Vorbereitung der Testplatten:

Nach entsprechenden Vortests mit allen drei Agar-Sorten, werden die besten Ergebnisse mit Agar 211 und 267 erzielt, der daher im Folgenden für den qualitativen Bioassay (Hemmhof Test bzw. Agar-Diffusionstest) eingesetzt wird.

Dem flüssigen Agar werden auf ein Volumen von 700 ml jeweils 10 ml einer Arbeitssuspension der Testkeime Candida albicans (Hefe) bzw. Aspergillus niger (Schimmelpilz) mit einem Keimtiter von ca. 10⁷ KBE/ml zugesetzt.

### 1.3 Testdurchführung (Hemmhof Test):

Auf die verfestigten Agar-Platten werden jeweils gleich große Stücke der PSI enthaltenden Tabletten (PSI mit 0,7 % ONS bzw. PSI mit 1,5 % Sorbinsäure) aufgelegt und bei 28°C für 5 Tage im Brutschrank inkubiert.

Als Positivkontrolle wird eine antimykotisch wirksame Formulierung (Clotrimazol) eingesetzt. Die Platten werden arbeitstäglich ausgewertet und die Hemmhöfe visuell beurteilt.

### 1.4 Test in Flüssig-Kultur:

Gleich große Stücke der PSI enthaltenden Tabletten (PSI mit 0,7 % ONS bzw. PSI mit 1,5 % Sorbinsäure) werden in Kolben mit 50 ml Caseinpepton-Sojamehlpepton-Bouillon (CSB z.B. Oxoid/CM 129) als Flüssigmedium gegeben und mit 0,1 ml einer Arbeitssuspension der Testkeime Candida albicans (Hefe) bzw. Aspergillus niger (Schimmelpilz) mit einem Keimtiter von ca. 10⁷ KBE/ml versetzt.

Die Kolben werden unter Schütteln und parallel ohne Schütteln bei 28°C inkubiert und das Wachstum der Testkeime in Gegenwart der PSI enthaltenden Tabs anhand der Trübung des Nährmediums beurteilt im Vergleich zu beimpftem Nährmedium ohne PSI (Positivkontrolle).

### 2. Ergebnisse

### 2.1 Hemmhoftest

Beide Tabletten zeigen nach 1 Tag eine vergleichbare Hemmwirkung gegen Hefen und Schimmelpilze, wobei die mit Sorbinsäure konservierten Tabletten deutlichere und schärfere Hemmhöfe ausbilden. Eine genaue Quantifizierung der Hemmwirkung ist in diesem Fall nicht möglich. Der Hemmhofdurchmesser lässt sich zwar prinzipiell zur Konzentration korrelieren, wobei für eine Quantifizierung jedoch eine Referenzgerade mit unterschiedlichen Konzentrationen einer geeigneten Standardsubstanz erforderlich ist. Es ist in diesem Hinblick auch zu beachten, dass die Größe der Hemmhöfe auch vom Molekulargewicht des jeweiligen Hemmstoffes und insbesondere von dessen Diffusionsverhalten im Agar abhängig ist.

Dies bedeutet beispielsweise, dass niedermolekulare Stoffe, die schnell in den Agar diffundieren, größere Hemmzonen ausbilden als hochmolekulare Substanzen mit vergleichbarer antimikrobieller Wirksamkeit.

Bei einer Auswertung nach 4 Tagen war keines der mit Sorbinsäure oder ONS konservierten Tabs mit Aspergillus überwachsen.

### 2.2 Flüssigkultur

Für Candida albicans wurden in den Kolben nach Inkubation folgende Keimzahlen bestimmt:

| Candida albicans | Keimzahl (KBE/ml) | |
|---|---|---|
| | ohne Schütteln | Schüttelkultur |
| Kontrolle | 4,0 x 10⁶ | 1,3 x 10⁷ |
| 1,5 % Sorbinsäure | 4,7 x 10⁵ | 1,0 x 10⁷ |
| 0,7 % ONS | 5,0 x 10⁵ | 3,0 x 10⁶ |

Die Ergebnisse für beide mikrobiziden Zusätze (1,5 % Sorbinsäure und 0,7 % ONS) sind vergleichbar. Es wird eine Keimreduktion um 1 log-Stufe im Vergleich zur Kontrolle erzielt.

## Patentansprüche

1. Verfahren zur Verhinderung von Ablagerungen in stehenden oder fließenden Wassersystemen, **dadurch gekennzeichnet, dass** dem stehenden Wasser oder dem abzuführenden Sicker-, Ab-, Fließ- oder Grundwasser ein Konditionierungsmittel auf Basis von Polysuccinimid oder dessen Teilhydrolysat und wenigstens einem Biostatikum zugegeben wird, wobei dem zu konditionierenden Gewässer 0,1 bis 10 000 g/m³ Polysuccinimid und 0,1 bis 100 g/m³ Biostatikum zugegeben wird und als Biostatika Phenol, ortho Phenylphenol oder Natriumorthophenylphenolat eingesetzt werden.

2. Verfahren gemäß Anspruch 1, **dadurch gekennzeichnet, dass** neben Polysuccinimid Härtestabilisatoren der Reihe anorganische kondensierte Phosphate, Organophosphonsäuren, Phosphatester, Polyphosphorsäureester, Aminophosphate, Bemsteinsäureamid, Kohlehydrate, Polysaccharide, Glukonate, Polyglycoside, Polyglucoside und deren Derivate, Polyoxycarbonsäuren sowie deren Copolymere, oxidierte Kohlehydrate, Proteine, wasserlösliche Polyaminosäuren, Silikate oder Zeolithe eingesetzt werden.

3. Verfahren gemäß der Ansprüche 1 oder 2, **dadurch gekennzeichnet, dass** zusätzlich Komplexbildner der Reihe Iminodisuccinat, Nitrilotriessigsäure, Zitronensäure, EDTA, Ethercarboxylate, oxidierte Kohlehydrate oder phosphorhaltige Verbindungen eingesetzt werden.

4. Verfahren gemäß einem der Ansprüche 1 bis 3, **dadurch gekennzeichnet, dass** neben dem Biostatikum ein Biozid eingesetzt wird.

5. Verfahren gemäß einem der Ansprüche 1 bis 4, **dadurch gekennzeichnet, dass** das fließende Wassersystem in der Erdölexploration oder in der Tunnelentwässerung auftritt.

6. Verfahren gemäß Anspruch 1, **dadurch gekennzeichnet, dass** das stehende Wassersystem in Schwimmbädern auftritt.

7. Verfahren gemäß Anspruch 1, **dadurch gekennzeichnet, dass** die Ablagerungen aus Calciumcarbonat, Magnesiumcarbonat, Calciumsulfat, Silikaten, Bariumsulfat, Eisenoxiden oder Calciummagnesiumphosphat bestehen.

## Claims

1. Process for preventing deposits in standing or flowing water systems, **characterized in that** a conditioning composition based on polysuccinimide or partial hydrolysate thereof and at least one biostatic is added to the standing water or the leachate water, wastewater, flowing water or groundwater to be drained off, 0.1 to 10 000 g/m³ of polysuccinimide and 0.1 to 100 g/m³ of biostatic being added to the water to be conditioned and the biostatics used being phenol, ortho-phenylphenol or sodium orthophenylphenolate.

2. Process according to Claim 1, **characterized in that**, in addition to polysuccinimide, hardness stabilizers are used from the group consisting of inorganic condensed phosphates, organophosphonic acids, phosphate esters, polyphosphoric acid esters, aminophosphates, succinamide, carbohydrates, polysaccharides, gluconates, polyglycosides, polyglucosides and their derivatives, polyoxycarboxylic acids and their copolymers, oxidized carbohydrates, proteins, water-soluble polyamino acids, silicates and zeolites.

3. Process according to Claim 1 or 2, **characterized in that** additionally complexing agents are used from the group consisting of iminodisuccinate, nitrilotriacetic acid, citric acid, EDTA, ethercarboxylates, oxidized carbohydrates and phosphorus compounds.

4. Process according to one of Claims 1 to 3, **characterized in that**, in addition to the biostatic, a biocide is used.

5. Process according to one of Claims 1 to 4, **characterized in that** the flowing water system occurs in mineral oil exploration or tunnel drainage.

6. Process according to Claim 1, **characterized in that** the standing water system occurs in swimming baths.

7. Process according to Claim 1, **characterized in that** the deposits consist of calcium carbonate, magnesium carbonate, calcium sulphate, silicates, barium sulphate, iron oxides or calcium magnesium phosphate.

## Revendications

1. Procédé pour empêcher les dépôts dans des systèmes d'eau qui stagne ou qui s'écoule, **caractérisé en ce qu'**on ajoute à l'eau stagnante ou à l'eau d'infiltration, usée, courante ou souterraine à évacuer un agent de conditionnement à base de polysuccinimide ou de son hydrolysat partiel et au moins un agent biostatique, en ajoutant à l'eau à conditionner 0,1 à 10 000 g/m³ de polysuccinimide et 0,1 à 100 g/m³ d'agent biostatique et on utilise comme agents biostatiques du phénol, de l'ortho-phénylphénol ou de l'ortho-phénylphénolate de sodium.

2. Procédé selon la revendication 1, **caractérisé en ce qu'**on utilise, outre le polysuccinimide, des stabilisateurs de la dureté de la série formée par les phosphates inorganiques condensés, les acides organophosphoniques, les esters de phosphate, les esters de l'acide polyphosphorique, les aminophosphates, l'amide de l'acide succinique, les hydrates de carbone, les polysaccharides, les gluconates, les polyglycosides, les polyglucosides et leurs dérivés, les poly(acides oxycarboxyliques) ainsi que leurs copolymères, les hydrates de carbone oxydés, les protéines, les polyaminoacides solubles dans l'eau, les silicates ou les zéolithes.

3. Procédé selon les revendications 1 ou 2, **caractérisé en ce qu'**on utilise en plus des complexants de la série formée par l'iminodisuccinate, l'acide nitrilotriacétique, l'acide citrique, l'EDTA, les éthercarboxylates, les hydrates de carbone oxydés ou les composés phosphorés.

4. Procédé selon l'une quelconque des revendications 1 à 3, **caractérisé en ce qu'**on utilise, outre l'agent biostatique, un agent biocide.

5. Procédé selon l'une quelconque des revendications 1 à 4, **caractérisé en ce que** le système d'eau qui s'écoule survient dans l'exploration pétrolière ou dans le drainage de tunnels.

6. Procédé selon la revendication 1, **caractérisé en ce que** le système d'eau qui stagne survient dans les piscines.

7. Procédé selon la revendication 1, **caractérisé en ce que** les dépôts sont constitués de carbonate de calcium, de carbonate de magnésium, de sulfate de calcium, de silicates, de sulfate de baryum, d'oxydes de fer ou de phosphate de calcium et de magnésium.
